# EUROPEAN PATENT APPLICATION

(11) **EP 2 045 851 A1**
(43) Date of publication of application: **08.04.2009**
(21) Application number: 08160470.4
(22) Date of filing: 16.07.2008
(51) Int. Cl.: H01M 2/02, H01M 2/10

(54) **Battery can, battery using the same, and method for manufacturing the same**

(30) Priority: 25.09.2007 JP 2007246699
(71) Applicant: Panasonic Corporation, Kadoma-shi Osaka 571-8501 (JP)
(72) Inventor: Hano, Masatoshi Matsushita Electric Industrial Co., Ltd Intellectual Property Rights Operations Co. IP Develop. Center, Osaka Osaka 540-6207 (JP); Mori, Katsuhiko Matsushita Electric Industrial Co., Ltd Intellectual Property Rights Operations Co. IP Develop. Center, Osaka Osaka 540-6207 (JP); Sumiyama, Shinichi Matsushita Electric Industrial Co., Ltd Intellectual Property Rights Operations Co. IP Develop. Center, Osaka Osaka 540-6207 (JP)
(74) Representative: Grünecker, Kinkeldey, Stockmair & Schwanhäusser Anwaltssozietät

(57) **Abstract**

A battery can is manufactured by drawing and ironing a nickel plated steel plate. The nickel plated steel plate includes a steel plate and a nickel plating layer made of nickel grains layered. Nickel grains present in a surface portion of the nickel plating layer are greater than nickel grains present in the vicinity of the interface with the steel plate.

## Description

### BACKGROUND OF THE INVENTION

### Field of the Invention

The present invention relates to a battery can, a battery using it, and a method for manufacturing it, and particularly relates to a bottomed cylindrical battery can formed of a nickel plated steel plate, a battery using it, and a method for manufacturing it.

### Related Art

Conventionally, steel plates subjected to nickel plating have been used for casings (cans) for batteries in which strong alkaline liquid is enclosed, such as an alkaline dry batter, a nickel-cadmium battery, a nickel-hydrogen secondary battery, and the like. The reason why the nickel plated steel plates are used for such batteries is that nickel has high alkali corrosion resistance, exhibits stable contact resistance at connection of a battery with an external terminal, and is excellent in weldability in spot welding at battery manufacture.

Methods for manufacturing a battery can from a nickel plated steel plate include a multi-step deep drawing method, a DI (drawing and ironing) method including an ironing step, and the like (see Japanese Unexamined Patent Application Publication 60-180058). Among of all, the DI method, of which resultant battery can has a thin side portion and a thick bottom portion, is a favorable battery can manufacturing method because much amounts of a positive electrode active material and a negative electrode active material can be filled therein and the pressure resistance is high with the thick bottom.

Processing of a nickel plated steel plate into a battery can by the DI method forms hairlines, and accordingly, dies for ironing must be exchanged frequently. To tackle this problem, Japanese Unexamined Patent Application Publication 9-50793 discloses a technique for preventing formation of hairlines by setting the sectional areas of the nickel grains in a surface portion of the nickel plating layer at 5.0 µm² or smaller.

### Summary of the Invention

### Problems that the Invention is to Solve

With a steel plate only subjected to nickel plating, peeling occurs at an interface between the nickel plating layer and the steel plate to form a pinhole in a battery can in bending in the deep drawing step, and a pinhole is also formed in the side face of the can, which is processed rather severely, in the ironing process. A pinhole in the inner face of the battery can lowers the batter voltage and generates gas while a pinhole in the outer face thereof causes rust to worsen the outer appearance. This leads to formation of a Ni-Fe diffusion layer in the interface between the nickel plating layer and the steel plate by annealing the nickel plated steel plate, as disclosed in Japanese Unexamined Patent Application Publication 9-50793.

The annealing must be performed at a temperature in the range between about 500°C and 700°C, which requires large amount of energy and a long period of time to increase the cost.

The present invention has been made in view of the foregoing and has its object of providing a battery can formed of a nickel plated steel plate not subjected to annealing with no pinhole formed in a nickel plating layer, a battery using it, and a method for manufacturing it.

### Means for Solving the Problems

To solve the above problems, the present invention provides a bottomed cylindrical battery can formed of a nickel plated steel plate in which the size of plating nickel grains is changed between a surface portion and a portion in the vicinity of an interface with a steel plate.

Specifically, a bottomed cylindrical battery can formed of a nickel plated steel plate in accordance with the present invention includes: a steel plate; and a nickel plating layer made of nickel grains, the nickel grains having sectional areas measured in sections thereof in parallel to the thickness direction of the nickel plating layer, wherein in a portion of the bottom face of the battery can which is substantially perpendicular to the side face thereof, A is in a range between 0.2 µm² and 0.5 µm², both inclusive, and 0.1<B/A<0.5 is satisfied where A is an average of sectional areas of nickel grains present in a surface portion of the nickel plating layer which ranges from the surface of the nickel plating layer to a part of the nickel plating layer which is 30 % deep in a thickness direction of the nickel plating layer from the surface thereof while B is an average of sectional areas of nickel grains present in an interface portion of the nickel plating layer which ranges from an interface with the steel plate to a part of the nickel plating layer which is 30 % shallow in the thickness direction of the nickel plating layer from the interface therewith. Wherein, the battery can is a terminal-cum-container in which electric power generating elements, such as a positive electrode, a negative electrode, an electrolyte, and the like are filled. Where t is a thickness of the nickel plating layer, the average sectional area A of the surface portion is a value obtained by averaging the sectional areas of a plurality of nickel grains present in a part ranging by 0.3t in the thickness direction from the surface of the nickel plating layer toward the interface between the steel plate and the nickel plating layer. Similarly, the average sectional area B of the interface portion is a value obtained by averaging the sectional areas of a plurality of nickel grains present in a part ranging by 0.3t in the thickness direction from the interface between the steel plate and the nickel plating layer toward the surface of the nickel plating layer. The method for measuring the sectional areas of nickel grains in a nickel plating layer will be described later.

With the above arrangement, progress of a crack formed in the nickel plating layer might stop in the middle of the nickel plating layer even if the nickel plated steel plate is not subjected to annealing in processing the nickel plated steel plate into a battery can, thereby leading to prevention of formation of a pinhole reaching the steel plate in the nickel plating layer.

Preferably, the nickel plating layer has a thickness in a range between 0.5 µm and 5 µm, both inclusive.

The battery in accordance with the present invention is a battery using the above described battery can. A strong alkaline liquid is preferably used as the electrolyte.

It is preferable in the above battery that the battery is an AA alkaline dry battery which generates gas of which total amount is 0.3 ml or less in four-week storage under an atmosphere of 80 °C.

A method for manufacturing a battery can in accordance with the present invention is a method for manufacturing a bottomed cylindrical battery can from a nickel plated steel plate including the steps of: preparing a nickel steel plate including a steel plate and a nickel plating layer made of nickel grains, the nickel grains having sectional areas measured in sections thereof in parallel to the thickness direction of the nickel plating layer, forming a cup-shaped intermediate from the nickel plated steel plate by deep drawing; and forming a battery can by drawing and ironing the cap-shaped intermediate, wherein in the nickel plating layer of the nickel plated steel plate, A is in a range between 0.2 µm² and 0.5 µm², both inclusive, and 0.1<B/A<0.5 is satisfied where A is an average of sectional areas of nickel grains present in a surface portion of the nickel plating layer which ranges from the surface of the nickel plating layer to a part of the nickel plating layer which is 30 % deep in a thickness direction of the nickel plating layer from the surface thereof while B is an average of sectional areas of nickel grains present in an interface portion of the nickel plating layer which ranges from an interface with the steel plate to a part of the nickel plating layer which is 30 % shallow in the thickness direction of the nickel plating layer from the interface therewith, and no annealing is performed on the nickel plated steel plate.

### Effects of the Invention

In the present invention, the grain diameter of the plating nickel grains in the surface portion is set greater at a predetermined ratio than that in the interface portion of the nickel plating layer of the nickel plated steel plate. Hence, formation of a pinhole in the nickel plating layer is prevented without performing annealing in processing the nickel plated steel plate into a battery can, thereby reducing the cost by eliminating the need for annealing while reducing the manufacturing time period.

### Brief Description of the Drawings

FIG. **1** is a sectional view of a battery can in accordance with Embodiment 1.
FIG. **2** is a sectional view of a cup-shaped intermediate.
FIG. **3** is a view schematically illustrating a method for manufacturing a battery can by a drawing and ironing machinery.
FIG. **4** is a view illustrating a section of a nickel plated steel plate in accordance with Embodiment 1.

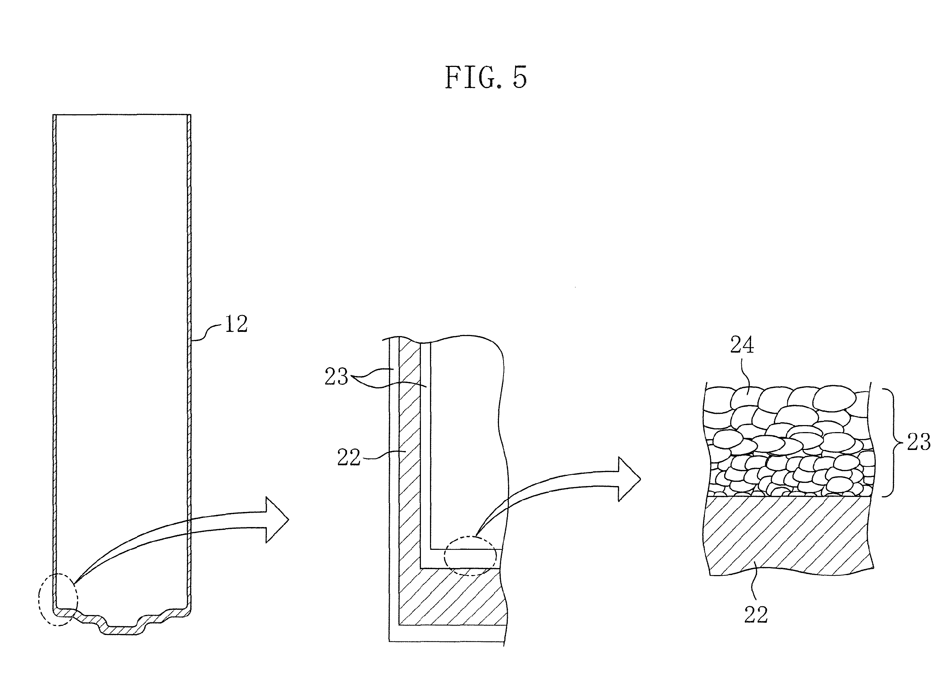

FIG. **5** is a view illustrating a section of the battery can in accordance with Embodiment 1.
FIG. **6** is a partially broken view of an alkaline dray battery.
FIG. **7** is a flowchart depicting steps for manufacturing a battery can.
FIG. **8** is a sectional view of a battery can with a welded positive electrode terminal.

### Description of the Preferred Embodiments

Prior to description of embodiments of the present invention, the process to the present invention will be described.

A nickel plating layer is formed of layered nickel crystal grains (plating nickel grains). In the processes of deep drawing, ironing, and the like of a nickel plated steel plate, the nickel grains are deformed by stress in the processes. Large stress or large deformation by the processes parts adjacent grains in a grain boundary.

Formation of a pinhole in a nickel plating layer through the processes might be a phenomenon that such partings in the grain boundaries continue in the thickness direction of a nickel plated steel plate to generate a crack ranging from the surface of the nickel plating layer to the interface between the nickel plating layer and the steel plate, thereby exposing the steel plate.

Annealing of a nickel plated steel plate forms a Ni-Fe diffusion layer in the interface between the nickel plating layer and the steel plate and increases the grain diameter of the plating nickel grains. Accordingly, the large plating nickel grains themselves are readily deformed in deep drawing, ironing, and the like, so that partings in the grain boundaries hardly occur. Further, the grain boundaries less occupies the nickel plating layer, so that the grain boundaries of the large plating nickel grains hardly continue in the thickness direction of the nickel plating layer. Therefore, even if partings in the grain boundaries occur, partings in the grain boundaries hardly continue in the thickness direction of the nickel plating layer. Even if partings continue, the steel plate is not exposed by the presence of the Ni-Fe diffusion layer. Hence, no pinhole might be formed in the nickel plating layer of the annealed nickel plated steel plate even through drawing or ironing.

In contrast, unless annealing is performed on a nickel plated steel plate, no Ni-Fe diffusion layer is formed in the interface between the nickel plating layer and the steel plate, and therefore, partings in grain boundaries continue in the thickness direction of the nickel plating layer to expose the steel plate. The grain diameter of the plating nickel grains in a non-annealed nickel plated steel plate is smaller than that in an annealed nickel plated steel plate, and therefore, the grain boundaries occupy the nickel plating layer largely to invite partings in grain boundaries.

Based on the foregoing knowledge, the inventors carried out various examinations to reach a nickel plated steel plate which is free from pinholes and can withstand the processes, such as deep drawing, ironing, and the like even without being subjected to annealing.

The embodiments of the present invention will now be described below with reference to the accompanying drawings. In the referenced drawings, the same reference numerals are assigned to the same components having substantially the same functions for the sake of simple description.

### (Embodiment)

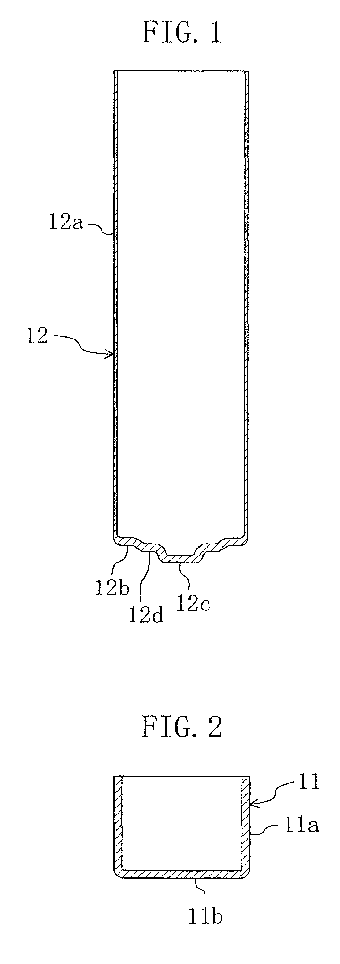

FIG. **1** shows a battery can **12** in accordance with Embodiment 1 of the present invention. The battery can **12** is used as a can for an alkaline dry battery and is manufactured through a deep drawing process and a DI (drawing and ironing) process on a nickel plated steel plate as a material.

The battery can **12** of the present embodiment is in a bottomed cylindrical shape, wherein the central portion of the circular bottom protrudes outward to form a positive electrode protrusion **12c**. Around the positive electrode protrusion **12c**, a bottom intermediate part **12d** and a bottom peripheral part **12b** are formed which are flat and perpendicular to a side face **12a** of the battery can **12**. The side face **12a** is drawn in the DI process to have a thickness approximately one half smaller than that of the nickel plated steel plate as a material while the positive electrode protrusion **12c**, the bottom peripheral part **12b**, and the bottom intermediate part **12d** are not drawn to have the same thickness as the nickel plated steel plate as a material.

The battery can **12** is formed by processing a cup-shaped intermediate **11** in the DI method, which is formed by drawing deep the nickel plated steel plate as a material. The thickness of the cup-shaped intermediate **11** is the same at a cup side face **11a** and a cup bottom face **11b** thereof as that of the nickel plated steel plate.

The nickel plated steel plate as a material is a rolled low carbon aluminum killed steel plate with a thickness of 0.4 mm, of which both faces are subjected to nickel plating by an electrolytic method. The thickness of the nickel plating layer thus formed is 0.5 to 5 µm. The thickness of the nickel plate layer of less than 0.5 µm may lead to baking of a can to a die and insufficient corrosion resistance. In contrast, the plating thickness exceeding 5 µm leads to sufficient prevention of pinholes but increases the cost.

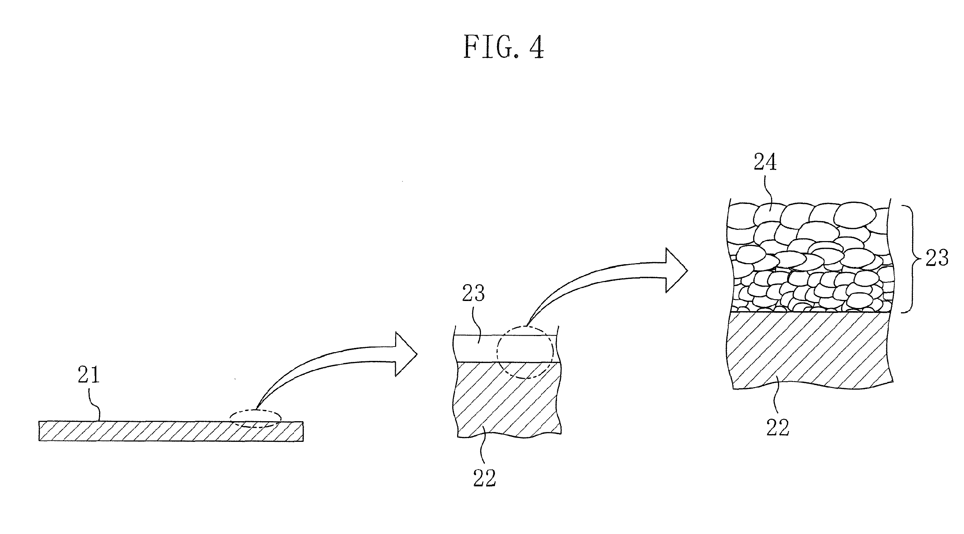

In performing nickel plating on the steel plate, a plating condition is changed in the middle of the plating at least one time for changing the size of nickel grains **24**. The condition may be changed successively. The plating condition is changed so that the size of nickel grains **24** near the steel plate (near the interface between the steel plate and the nickel plating layer) becomes relatively small while the size of nickel grains **24** near the surface of the nickel plating layer becomes relatively large. The plating condition to be changed may be a current density, a liquid temperature, plating compositions, and the like. Among of all, the current density is preferable because it can be changed easily at low cost. In the thus formed nickel plating layer of the nickel plated steel plate, the size of the nickel grains **24** near the surface of the nickel plating layer (a surface portion ranging from the surface thereof to a part 30 % deep in the thickness direction of the nickel plating layer from the surface thereof) is greater at a predetermined ratio than that of the nickel grains **24** near the interface between the steel plate **22** and the nickel plating layer **23** (an interface portion ranging from the interface therebetween to a part 30 % shallow in the thickness direction of the nickel plating layer from the interface therebetween), as shown in FIG. **4**. The size of the nickel grains **24** is judged from the sectional areas of the nickel grains **24** appearing in a section obtained by cutting the nickel plated steel plate **21** perpendicularly to the surface thereof (in parallel to the thickness direction of the nickel plating layer). The size of the nickel grains **24** near the interface is 10 to 50 % of that of the nickel grains **24** near the surface thereof in comparison between the averages of the sectional areas thereof.

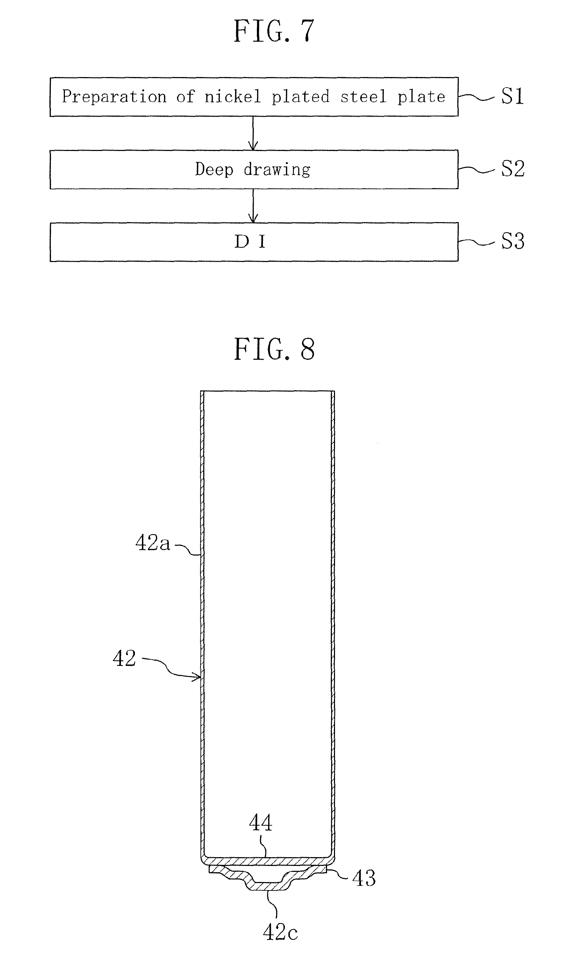

As described above, the battery can **12** of the present embodiment is formed by the steps of: a step of (S1) preparing the nickel plated steel plate; a drawing step (S2) of drawing to form a cup-shaped intermediate **11**; and a DI step (S3) of drawing and ironing the cup-shaped intermediate **11,** as shown in FIG. **7**. No annealing is performed in any of these steps. Different from the conventional battery can subjected to annealing, the nickel plating layer and the steel plate are in direct contact with each other with no Ni-Fe diffusion layer intervening therebetween in the battery can of the present embodiment.

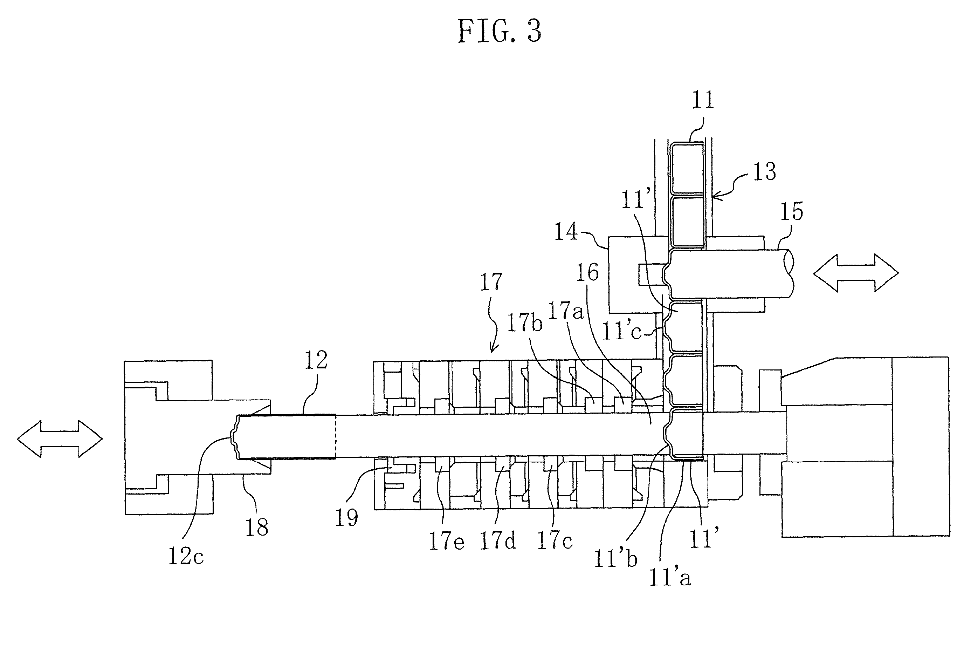

The DI step (S3) is performed in a drawing and ironing machinery shown in FIG. **3**.

First, an intermediate conveyer **13** conveys the cup-shaped intermediate **11** to a pre-formation section so that a pre-formation punch **15** and a pre-formation die **4** form a positive electrode protrusion pre-protruding part **11'c** in the cup-shaped intermediate **11** to obtain a protruded intermediate **11'**.

Subsequently, the protruded intermediate **11'** is conveyed to a main formation section to be subjected to forming by a die mechanism **17**. The die mechanism **17** includes a first drawing die **17a**, a second drawing die **17b**, a first ironing die **7c**, a second ironing die **17d**, and a third ironing die **17e**, which are arranged coaxially with a main punch **16** in series. A main forming mold **18** is arranged so as to be opposed to the distal end of the main punch **16** in a full extension. The protruded intermediate **11'** is pushed by the main punch **16** to be drawn by the first and second dies **17a, 17b,** thereby being formed in a shape along the outer contour of the main punch **16**. As the main punch **16** advances further, the side faces of the protruded intermediate **11'** are ironed by the first to third ironing dies **17c** to **17e** to be extended, thereby reducing the thickness of the side face thereof.

After the ironing, the bottom peripheral part **12b**, the distal end of the main punch **16**, and the main formation mold **18** form the bottom intermediate part **12d**, and the positive electrode protrusion **12c** from a flat bottom **11b'** of the protruded intermediate **11'**. Then, a stripper **19** takes off a formed piece from the drawing and ironing machinery, and then, the end part of the formed piece is cut, thereby completing the battery can **12**.

Through the above processes, the side face **12a** of the battery can **12** is reduced in thickness to about one half of the nickel plated steel plate as a material. The nickel plating layer at the side face **12a** is extended as well while the structure (size distribution of the nickel grains **24**) of the nickel plated steel plate at the bottom peripheral part **12b**, the bottom intermediate part **12d**, and the positive electrode protrusion **12c** remains intact with no change in thickness. Even though the side face **12a** of the nickel plating layer **23** is extended, less or no pinhole reaching the steel plate **22** is formed in the nickel plating layer **23** in the present embodiment. This might be because of difference in size of the plating nickel grains **24** between in the surface portion and in the interface portion.

In detail, if all the plating nickel grains are relatively large, the grain boundaries less occupy the nickel plating layer relatively. Therefore, even if the partings hardly occur due to the presence of less grain boundaries, the partings continue to the interface with the steel plate once the partings occur in the nickel plating layer through extension of the nickel plating layer, thereby forming a pinhole. In contrast, if relatively small plating nickel grains are present in the vicinity of the interface with the steel plate, less or no pinhole might be formed. A pinhole is not formed unless many partings continue in series even upon occurrence of the partings in the grain boundaries in a part of the plating layer near the interface where the grain boundaries occupy much. The grain boundaries where the partings may occur are present at random in the plating layer, and therefore, the partings in the grain boundaries hardly continue. Consequently, partings in the grain boundaries continuing from the surface of the plating layer might hardly reach the interface with the steel plate to form less or no pinhole. The reason therefor might be that: the nickel grains are crystal-grown in random directions by plating, and accordingly, whether or not grain boundaries between adjacent grains is liable to be parted in a given direction upon stress depends on difference in direction of the crystal growth of the grains; and grain boundaries at which parting is liable to occur might not localize.

It is considered that the surface portion of the nickel plating layer mainly receives stress to be deformed largely while the interface portion is less deformed relatively. If the size of the nickel grains is relatively small in the entire nickel plating layer, the nickel plated steel plate is difficult to be processed into a battery can especially in the ironing step, which means that large power is required for ironing. This increases processing stress to cause many partings in the grain boundaries, thereby leading to continuation of partings in the grain boundaries to the interface with the steel plate at a stretch. As a result, a pinhole is formed.

A battery (an AA alkaline dry battery) using the battery can **12** will be described next.

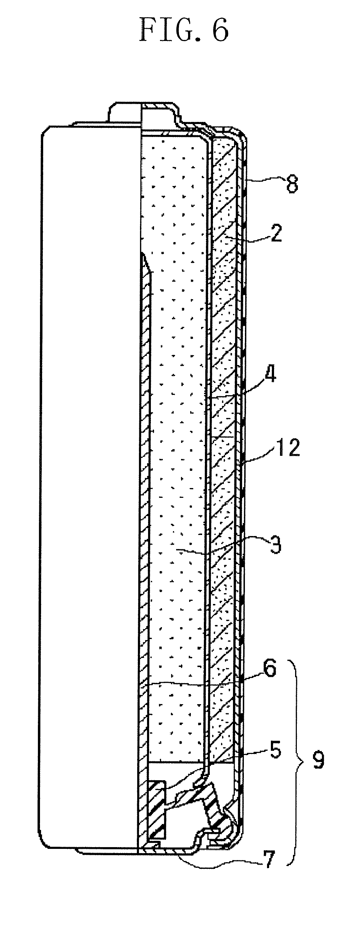

As shown in FIG. **6**, a hollowed cylindrical positive electrode mixture **2** is accommodated in the bottomed cylindrical battery can **12**, which serves also as a positive electrode current collector, so as to be in contact therewith. A gelled negative electrode **3** is inserted in the hollowed part of the positive electrode mixture **2** with a bottomed cylindrical separator **4** interposed. After electric power generating components, such as the positive electrode mixture **2**, the gelled negative electrode **3**, and the like are accommodated, the opening of the battery can **12** is sealed by an assembly sealant **9** which is an integration of a resin sealant **5** and a negative electrode terminal plate **7** electrically connected to a nail-shaped negative electrode current collector **6**. The outer face of the battery can **12** is covered with a jacket **8** for ensuing insulation.

The positive electrode mixture **2**, the separator **4**, and the gelled negative electrode **3** contain an alkaline electrolyte. The alkaline electrolyte is an aqueous solution containing potassium hydroxide of 30 to 40 weight % and zinc oxide of 1 to 3 weight %.

As the separator **4**, an intermingled non-woven fabric mainly made of polyvinyl alcohol fiber and rayon fiber is used, for example. The separator **4** is obtainable by a known method disclosed in Japanese Unexamined Patent Application Publication 6-163024 or Japanese Unexamined Patent Application Publication 2006-32320, for example.

The positive electrode mixture **2** may contain a positive electrode active material containing, for example, at least one of manganese dioxide powder and oxy nickel hydroxide powder, a conductor, such as graphite or the like, and the aforementioned alkaline electrolyte. Polyethylene powder or the like as a binder and stearate salt or the like as a lubricant may be added appropriately.

The gelled negative electrode **3** may be a substance obtained in such a manner that a gelling agent, such as sodium polyacrylate or the like is added to the alkaline electrolyte and zinc alloy powder of the negative electrode active material is mixed with and dispersed in the resultant gelled substance, for example. In order to enhance corrosion resistance, a metal compound high in hydrogen overvoltage, such as indium, bismuth, or the like or a phosphoric acid ester based surface active agent or the like may be added appropriately. In order to suppress zinc dendrite, a slight amount of silicon compound, such as silicate, a salt thereof, or the like may be added appropriately.

A substance excellent in corrosion resistance is used preferably as the zinc alloy powder of the negative electrode active material, and more preferably, a substance in which any or all of mercury, cadmium, and lead are not added is preferable in view of environment. The zinc alloy may contain, for example, indium of 0.01 to 0.1 weight %, bismuth of 0.005 to 0.02 weight %, and aluminum of 0.001 to 0.005 weight %. Only one of the alloy components may be contained, or two or more thereof may be contained.

Referring to the resin sealant **5**, a through hole allowing the negative electrode current collector **6** to pass therethrough is formed in the central part thereof, an annular thin portion serving as a safety valve is provided around the through hole, and an outer peripheral portion continues from the outer periphery of the annular thin portion. The resin sealant **5** is obtainable by injection-forming nylon, polypropylene, or the like into a predetermined size and shape, for example.

The negative electrode current collector **6** is obtainable by press-forming a wire of silver, copper, brass, or the like into a nail shape of a predetermined size. In order to prevent contamination with impurity in the processes and obtain the opacifying effects, the surface of the negative electrode current collector **6** is preferably subjected to tin plating or indium plating. The negative electrode current collector **6** may be obtained by a known method disclosed in Japanese Unexamined Patent Application Publication 5-283080 or Japanese Unexamined Patent Application Publication 2001-85018, for example.

The negative electrode terminal plate 7 is substantially in a cap shape having a peripheral collar portion in which a plurality of gas holes are formed for allowing pressure to escape upon operation of the safety valve of the resin sealant **5**. The negative electrode terminal plate **7** is obtainable by press-forming a nickel plated steel plate, a tin plated steel plate, or the like into a predetermined size and shape.

Since the alkaline dry battery according to the present embodiment uses the battery can **12** of the present embodiment, generation of gas and lowering of the battery voltage are prevented even though the alkaline electrolyte of strong alkaline is inserted. (Working Examples)

Description will be given below of evaluation of working examples and comparative examples using various nickel plated steel plates in which the thickness of the nickel plating layers and the size distribution of the nickel grains are changed. The evaluation was carried out on the basis of observation of pinholes in the nickel plating layers visualized by a salt spray test and measurement of the amount of gas generated after battery assembly. Each size of the nickel grains was measured in such a manner that: the vertical sections of the nickel plating layers were expanded by twenty-thousand times by a scanning ion microscope; and the sectional areas of the nickel grains in a given area of 5 µm² in each of the surface portions and the interface portions (each of the portions ranges 30 % of the thickness of the plating layer in the thickness direction of the plating layer) were measured in the expanded vertical sections by an image analysis grain size distribution measuring software, "Mac-View," a product by Mountech Co., Ltd. Then, the measured sectional areas of the nickel grains were averaged in each portion.

Check for pinholes (where the steel plate is exposed) formed in the nickel plating layers were carried out by viewing after a salt spray test prescribed in JIS Z 2371 (1994) (hereinafter referred to it merely as a salt spray test) for 90 minutes. The degree of pinhole generation was judged according to rating. Pinhole generation rated at the rating number of around 9.8-3 is denoted by ○, that of around 9.5-3 is denoted by △, and that lower than around 9.3-3 is denoted by x.

The amount of gas generated after battery assembly was measured in such a manner that: the assembled alkaline dry batteries with their assembly sealants taken off were put into a gas collecting glass jig in which flowing paraffin was filled, were sunk in the flowing paraffin, and was then stored for four weeks under an atmosphere at 80°C; and the amount of gas generated in the storage per one dry battery was measured. The following alkaline dry batteries were prepared for the evaluation.

Electrolyte manganese dioxide powder with an average grain diameter of 35 µm and graphite powder with an average grain diameter of 15 µm were mixed with each other at a weight ratio of 94:6, the thus mixed substance was mixed at a weight ratio of 100:2 with an aqueous solution as an alkaline electrolyte containing potassium hydroxide of 33 weight % and zinc oxide of 1 weight %, and then, the resultant mixed substance was stirred sufficiently and was press-formed into a flake shape. Subsequently, the flake-shaped positive electrode mixture was milled to be granular, the granular mixture was classified by a screen, and then, the classified grains of 10 to 100 meshes were pressure-formed into a hollowed cylindrical shape, thereby obtaining a pellet-shaped positive electrode mixture. Next, sodium polyacrylate power as a gelling agent, an aqueous solution as an alkaline electrolyte containing potassium hydroxide of 35 weight % and zinc oxide of 2 weight %, and zinc alloy powder were mixed with each other at a weight ratio of 0.8:33.6:65.6, thereby obtaining a gelled negative electrode. The zinc alloy powder used herein contains indium of 0.020 weight %, bismuth of 0.005 weight %, and aluminum of 0.005 weight %, has a mean volume grain diameter of 160 µm, and includes grains by 35 % of which average grain diameter is 75 µm or less. Two positive electrodes of 5.2 g obtained as above were inserted in a battery can and were pressed by a pressure jig to adhere to the inner wall of the battery can. A bottomed cylindrical separator was inserted in the center hollow of the positive electrode mixture adhering to the inner wall of the battery can, and an aqueous solution as an alkaline electrolyte of 1.7 g containing potassium hydroxide of 35 weight % and zinc oxide of 2 weight % was injected into the separator. After elapse of a predetermined time period, a gelled negative electrode of 6.3 g obtained as above was filled in the separator. Thus, an AA alkaline dry battery from which assembly sealant is taken off was obtained.

### (Working Example 1)

As a steel plate before plated, a low carbon aluminum killed steel plate rolled to have a thickness of 0.4 mm was prepared. After pretreatment for plating was performed, nickel plating was performed at a current density of 15 A/dm² with the use of a plating bath of nickel sulfate of 300 g/liter, nickel chloride of 35 g/liter, boric acid of 40 g/liter, and lauryl sulfate of 0.4 ml/liter to form a nickel plating layer with a thickness of 1 µm. Thereafter, nickel plating was performed at a current density of 10 A/dm² with the use of the same plating bath as above to form a nickel plating layer with a thickness of 1 µm, thereby forming a nickel plating layer with a thickness of 2.0 µm in total on each of the obverse and reverse faces of the steel plate.

The vertical sections of the plating nickel grains in the thus obtained nickel plated steel plate were expanded by twenty-thousand times by the scanning ion microscope, and the sectional areas of the grains in the surface portion and the interface portion were measured by the image analysis grain size distribution measuring software, "Mac-View," a product by Mountech Co., Ltd. to obtain each average sectional area of the plating nickel grains therein. Specifically, an average sectional area A of the plating grains in a given area of 5 µm² was obtained in the range (the surface portion) from the surface of the nickel plating layer to a part 0.6 µm deep in the thickness direction of the nickel plating layer from the surface thereof, which is 30 % of 2.0 µm thickness of the nickel plating layer. On the other hand, an average sectional area B of the plating grains in a given area of 5 µm² was obtained in the range (the interface portion) from the interface with the steel plate to a part 0.6 µm shallow in the thickness direction of the nickel plating layer from the interface therewith, which is 30 % of 2.0 µm thickness of the nickel plating layer.

The average sectional area A of the plating grains in the surface portion was 0.50 µm² while the average sectional area B of the plating grains in the interface portion (the vicinity of the interface with the steel plate) was 0.10 µm², and accordingly, B/A was 0.2.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Working Example 2)

With the use of the same materials as those in Working Example 1, nickel plating was performed at a current density of 15 A/dm² to form a nickel plating layer with a thickness of 0.25 µm, and then, nickel plating was performed at a current density of 10 A/dm² to form a nickel plating layer with a thickness of 0.25 µm, so that a nickel plating layer with a thickness of 0.5 µm in total was formed on each of the obverse and reverse faces of the steel plate.

The average sectional area A of the plating grains in a given area of 5 µm² of the surface portion ranging from the surface of the nickel plating layer to a part 0.15 µm deep in the thickness direction of the nickel plating layer from the surface thereof, which is 30 % of 0.5 µm thickness of the nickel plating layer, was 0.50 µm² while the average sectional area B of the plating grains in a given area of 5 µm² of the interface portion ranging from the interface with the steel plate to a part 0.15 µm shallow in the thickness direction of the nickel plating layer from the interface therewith was 0.10 µm². The ratio of B/A was 0. 2.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Working Example 3)

With the use of the same materials as those in Working Example 1, nickel plating was performed at a current density of 15 A/dm² to form a nickel plating layer with a thickness of 2.5 µm, and then, nickel plating was performed at a current density of 10 A/dm² to form a nickel plating layer with a thickness of 2.5 µm, so that a nickel plating layer with a thickness of 5 µm in total was formed on each of the obverse and reverse faces of the steel plate.

The average sectional area A of the plating grains in a given area of 5 µm² of the surface portion ranging from the surface of the nickel plating layer to a part 1.5 µm deep in the thickness direction of the nickel plating layer from the surface thereof, which is 30 % of 5 µm thickness of the nickel plating layer, was 0.50 µm² while the average sectional area B of the plating grains in a given area of 5 µm² of the interface portion ranging from the interface with the steel plate to a part 1.5 µm shallow in the thickness direction of the nickel plating layer from the interface therewith was 0.10 µm². The ratio of B/A was 0. 2.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Working Example 4)

With the use of the same materials as those in Working Example 1, nickel plating was performed at a current density of 15.6 A/dm² to form a nickel plating layer with a thickness of 1 µm, and then, nickel plating was performed at a current density of 10 A/dm² to form a nickel plating layer with a thickness of 1 µm, so that a nickel plating layer with a thickness of 2 µm in total was formed on each of the obverse and reverse faces of the steel plate.

The average sectional area A of the plating grains in the surface portion was 0.50 µm² while the average sectional area B of the plating grains in the interface portion was 0.05 µm². The ratio of B/A was 0. 1.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Working Example 5)

With the use of the same materials as those in Working Example 1, nickel plating was performed at a current density of 13.1 A/dm² to form a nickel plating layer with a thickness of 1 µm, and then, nickel plating was performed at a current density of 10 A/dm² to form a nickel plating layer with a thickness of 1 µm, so that a nickel plating layer with a thickness of 2 µm in total was formed on each of the obverse and reverse faces of the steel plate.

The average sectional area A of the plating grains in the surface portion was 0.50 µm while the average sectional area B of the plating grains in the interface portion was 0.25 µm². The ratio of B/A was 0. 5.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Working Example 6)

With the use of the same materials as those in Working Example 1, nickel plating was performed at a current density of 16 A/dm² to form a nickel plating layer with a thickness of 1 µm, and then, nickel plating was performed at a current density of 13.8 A/dm² to form a nickel plating layer with a thickness of 1 µm, so that a nickel plating layer with a thickness of 2 µm in total was formed on each of the obverse and reverse faces of the steel plate.

The average sectional area A of the plating grains in the surface portion was 0.20 µm² while the average sectional area B of the plating grains in the interface portion was 0.02 µm². The ratio of B/A was 0. 1.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Working Example 7)

With the use of the same materials as those in Working Example 1, nickel plating was performed at a current density of 15 A/dm² to form a nickel plating layer with a thickness of 1 µm, and then, nickel plating was performed at a current density of 13.8 A/dm² to form a nickel plating layer with a thickness of 1 µm, so that a nickel plating layer with a thickness of 2 µm in total was formed on each of the obverse and reverse faces of the steel plate.

The average sectional area A of the plating grains in the surface portion was 0.20 µm² while the average sectional area B of the plating grains in the interface portion was 0.10 µm². The ratio of B/A was 0. 5.

With the use of the above nickel plated steel plate, an AA alkaline dry battery was prepared. Observation of the thus prepared battery through the salt spray test found that no nickel peeling occurred and pinhole generation in the side wall of the battery was rated at the rating number around 9.8-3, which means favorable results. The amount of gas generated after battery assembly was less, which is also favorable.

### (Comparative Example 1)

A low carbon aluminum killed steel plate rolled to have a thickness of 0.4 mm was used as a steel plate before plated, similarly to that in the working examples. After pretreatment for plating was performed, nickel plating was performed with the use of the same plating path as that in the working examples at a current density of 15 A/dm² without changing the current density in the middle, thereby forming a nickel plating layer with a thickness of 2.0 µm on each of the reverse and obverse faces of the steel plate.

Similarly to the working examples, the sectional areas of the plating nickel grains in the surface portion and the interface portion of the thus obtained nickel plated steel plate were measured to obtain each average sectional area of the plating grains therein. The measurement results were such that the average sectional area A of the plating grains in the surface portion was 0.10 µm² while that B of the plating grains in the interface portion was 0.10 µm², meaning that B/A was 1.

With the use of the above nickel plated steel plate, an AA alkaline dry battery was prepared. While no peeling of the nickel layer was observed, the salt spray test resulted in the rating number around 9-3, which means that many pinholes were observed in the side wall of the battery. The amount of gas generated after battery assembly was greater than that in the working examples.

### (Comparative Example 2)

Plating was performed under the same conditions as those in Comparative Example 1 except that the current density was set at 10 A/dm², thereby forming a plating layer with a thickness of 2.0 µm on each of the obverse and reverse faces of the steel plate.

Similarly to the working examples, the sectional areas of the plating nickel grains in the surface portion and the interface portion of the thus obtained nickel plated steel plate were measured to obtain each average sectional area of the plating grains therein. The measurement results were such that the average sectional area A of the plating grains in the surface portion was 0.50 µm² while that B of the plating grains in the interface portion was 0.50 µm², meaning that B/A was 1.

With the use of the above nickel plated steel plate, an AA alkaline dry battery was prepared. While no peeling of the nickel layer was observed, the salt spray test resulted in the rating number around 9.5-3, which means that many pinholes were observed in the side wall of the battery. The amount of gas generated after battery assembly was greater than that in the working examples.

### (Comparative Example 3)

With the use of the same materials as those in the working examples, nickel plating was performed at a current density of 11.3 A/dm² to form a nickel plating layer with a thickness of 1 µm, and then, nickel plating was performed at a current density of 10 A/dm² to form a nickel plating layer with a thickness of 1 µm, so that nickel plating layers of 2 µm in total were formed on the obverse and reverse faces of the steel plate.

The measurement results of the sectional areas of the nickel grains in the thus obtained nickel plated steel plate were such that the average sectional area A of the plating nickel grains in the surface portion was 0.50 µm² while that B of the plating nickel grains in the interface portion was 0.40 µm², meaning that B/A was 0.8.

With the use of the above nickel plated steel plate, an AA alkaline dry battery was prepared. While no peeling of the nickel layer was observed, the salt spray test resulted in the rating number around 9.5-3, which means that many pinholes were observed in the side wall of the battery. The amount of gas generated after battery assembly was greater than that in the working examples.

### (Comparative Example 4)

With the use of the same materials as those in the working examples, nickel plating was performed at a current density of 16 A/dm² to form a nickel plating layer with a thickness of 1 µm, and then, nickel plating was performed at a current density of 10 A/dm² to form a nickel plating layer with a thickness of 1 µm, so that nickel plating layers of 2 µm in total were formed on the obverse and reverse faces of the steel plate.

The measurement results of the sectional areas of the nickel grains in the thus obtained nickel plated steel plate were such that the average sectional area A of the plating nickel grains in the surface portion was 0.50 µm² while that B of the plating nickel grains in the interface portion was 0.02 µm², meaning that B/A was 0.04.

With the use of the above nickel plated steel plate, an AA alkaline dry battery was prepared. While no peeling of the nickel layer was observed, the salt spray test resulted in the rating number around 9.3-3, which means that many pinholes were observed in the side wall of the battery. The amount of gas generated after battery assembly was greater than that in the working examples.

### (Comparative Example 5)

With the use of the same materials as those in the working examples, nickel plating was performed at a current density of 14.4 A/dm² to form a nickel plating layer with a thickness of 1 µm, and then, nickel plating was performed at a current density of 13.8 A/dm² to form a nickel plating layer with a thickness of 1 µm, so that nickel plating layers of 2 µm in total were formed on the obverse and reverse faces of the steel plate.

The measurement results of the sectional areas of the nickel grains in the thus obtained nickel plated steel plate were such that the average sectional area A of the plating nickel grains in the surface portion was 0.20 µm² while that B of the plating nickel grains in the interface portion was 0.15 µm², meaning that B/A was 0.75.

With the use of the above nickel plated steel plate, an AA alkaline dry battery was prepared. While no peeling of the nickel layer was observed, the salt spray test resulted in the rating number around 9.5-3, which means that many pinholes were observed in the side wall of the battery. The amount of gas generated after battery assembly was greater than that in the working examples.

### (Comparative Example 6)

With the use of the same materials as those in the working examples, nickel plating was performed at a current density of 16.1 A/dm² to form a nickel plating layer with a thickness of 1 µm, and then, nickel plating was performed at a current density of 13.8 A/dm² to form a nickel plating layer with a thickness of 1 µm, so that nickel plating layers of 2 µm in total were formed on the obverse and reverse faces of the steel plate.

The measurement results of the sectional areas of the nickel grains in the thus obtained nickel plated steel plate were such that the average sectional area A of the plating nickel grains in the surface portion was 0.20 µm² while that B of the plating nickel grains in the interface portion was 0.01 µm², meaning that B/A was 0.05.

With the use of the above nickel plated steel plate, an AA alkaline dry battery was prepared. While no peeling of the nickel layer was observed, the salt spray test resulted in the rating number around 9-3, which means that many pinholes were observed in the side wall of the battery. The amount of gas generated after battery assembly was greater than that in the working examples.

Table 1 summarizes the results of the evaluation on Working Examples 1 to 7 and Comparative Examples 1 to 6.

**Table 1**

| | Sectional area A of surface portion (µm²) | Sectional area B of interface portion (µm²) | B/A (%) | Plating thickness (µm) | Rating number | Salt spray test | AA Alkaline dry cell (LR6) Amount of collected gas (ml/cell) | |
|---|---|---|---|---|---|---|---|---|
| | | | | | | | After assembly | After 4 weeks storage at 80°C |
| WE 1 | 0.50 | 0.10 | 20 | 2.0 | 9.8-3 | ○ | 0.30 | 0.60 |
| WE 2 | 0.50 | 0.10 | 20 | 0.5 | 9.8-3 | ○ | 0.30 | 0.60 |
| WE 3 | 0.50 | 0.10 | 20 | 5.0 | 9.8-3 | ○ | 0.30 | 0.55 |
| WE 4 | 0.50 | 0.05 | 10 | 2.0 | 9.8-3 | ○ | 0.30 | 0.55 |
| WE 5 | 0.50 | 0.25 | 50 | 2.0 | 9.8-3 | ○ | 0.30 | 0.55 |
| WE 6 | 0.20 | 0.02 | 10 | 2.0 | 9.8-3 | ○ | 0.30 | 0.60 |
| WE 7 | 0.20 | 0.10 | 50 | 2.0 | 9.8-3 | ○ | 0.30 | 0.60 |
| CE 1 | 0.10 | 0.10 | 100 | 2.0 | 9-3 | x | 0.30 | 0.80 |
| CE 2 | 0.50 | 0.50 | 100 | 2.0 | 9.5-3 | △ | 0.30 | 0.80 |
| CE 3 | 0.50 | 0.40 | 80 | 2.0 | 9.5-3 | △ | 0.30 | 0.80 |
| CE 4 | 0.50 | 0.02 | 4 | 2.0 | 9.3-3 | x | 0.30 | 0.75 |
| CE 5 | 0.20 | 0.15 | 75 | 2.0 | 9.5-3 | △ | 0.30 | 0.80 |
| CE 6 | 0.20 | 0.01 | 5 | 2.0 | 9-3 | x | 0.30 | 0.80 |

In the above working examples and comparative example, the sectional areas of the plating nickel grains were measured in the nickel plated steel plates. Since the plating conditions at portions substantially perpendicular to the side face of the battery can, such as the bottom peripheral part, the positive electrode protrusion, and the like of the nickel plated steel plate are substantially maintained even after assembled to the battery can. Accordingly, the same effects as those obtained from the nickel plated steel plate as a material can be obtained when the sectional areas of the plating nickel grains are measure at any of the portions of the assembled battery.

### (Other Embodiments)

The above embodiment and working examples are mere examples of the present invention, and the present invention is not limited thereto. The compositions of the nickel plating bath and the plating conditions may differ from the above as long as the size distribution of the plating nickel grains falls in the above predetermined range. Application of the above battery can to a nickel metal hydride battery attains the same effects. The nickel metal hydride battery is a battery using oxy nickel hydroxide for the positive electrode, hydrogen occluding alloy for the negative electrode, and an aqueous solution of potassium hydroxide as the electrolyte.

As shown in FIG. **8**, in a case of a positive electrode terminal welded battery can **42** in which a positive electrode terminal plate **43** is welded to a flat bottom **44** thereof to form a positive electrode protrusion **42c**, the nickel plating layer may have the above grain size distribution only at the bottom **44** perpendicular to the side face **42a** in the above structure.

## Claims

1. A bottomed cylindrical battery can formed of a nickel plated steel plate, comprising:
a steel plate; and
a nickel plating layer made of nickel grains, the nickel grains having sectional areas measured in sections thereof in parallel to the thickness direction of the nickel plating layer,
wherein in a portion of the bottom face of the battery can which is substantially perpendicular to the side face thereof, A is in a range between 0.2 µm² and 0.5 µm², both inclusive, and 0.1<B/A<0.5 is satisfied where A is an average of sectional areas of nickel grains present in a surface portion of the nickel plating layer which ranges from the surface of the nickel plating layer to a part of the nickel plating layer which is 30 % deep in a thickness direction of the nickel plating layer from the surface thereof while B is an average of sectional areas of nickel grains present in an interface portion of the nickel plating layer which ranges from an interface with the steel plate to a part of the nickel plating layer which is 30 % shallow in the thickness direction of the nickel plating layer from the interface therewith.

2. The battery can of claim 1,
wherein the nickel plating layer has a thickness in a range between 0.5 µm and 5 µm, both inclusive.

3. A battery using the battery can of claim 1 or 2.

4. The battery of claim 3,
wherein the battery is an AA alkaline dry battery which generates gas of which total amount is 0.3 ml or less in four-week storage under an atmosphere of 80 °C.

5. A method for manufacturing a bottomed cylindrical battery can from a nickel plated steel plate, comprising the steps of:
preparing a nickel steel plate including a steel plate and a nickel plating layer made of nickel grains, the nickel grains having sectional areas measured in sections thereof in parallel to the thickness direction of the nickel plating layer,
forming a cup-shaped intermediate from the nickel plated steel plate by deep drawing; and
forming a battery can by drawing and ironing the cap-shaped intermediate,
wherein in a the nickel plating layer of the nickel plated steel plate, A is in a range between 0.2 µm² and 0.5 µm², both inclusive, and 0.1<B/A<0.5 is satisfied where A is an average of sectional areas of nickel grains present in a surface portion of the nickel plating layer which ranges from the surface of the nickel plating layer to a part of the nickel plating layer which is 30 % deep in a thickness direction of the nickel plating layer from the surface thereof while B is an average of sectional areas of nickel grains present in an interface portion of the nickel plating layer which ranges from an interface with the steel plate to a part of the nickel plating layer which is 30 % shallow in the thickness direction of the nickel plating layer from the interface therewith, and no annealing is performed on the nickel plated steel plate.
